## Europäisches Patentamt

## European Patent Office

## Office européen des brevets

(19)

(11) Veröffentlichungsnummer: **0 243 587**
**B1**

(12) **EUROPÄISCHE PATENTSCHRIFT**

(45) Veröffentlichungstag der Patentschrift: **09.05.90**

(51) Int. Cl.⁵: **B 22 D 41/08**

(21) Anmeldenummer: **87101325.6**

(22) Anmeldetag: **31.01.87**

(54) **Feuerfester Formkörper, insbesondere Platte für Schieberverschlüsse.**

(30) Priorität: **30.04.86 DE 3614730**

(43) Veröffentlichungstag der Anmeldung:
**04.11.87 Patentblatt 87/45**

(45) Bekanntmachung des Hinweises auf die Patenterteilung:
**09.05.90 Patentblatt 90/19**

(84) Benannte Vertragsstaaten:
**AT BE CH DE ES FR GB IT LI NL SE**

(56) Entgegenhaltungen:
**BE-A- 893 054**
**DE-A-2 719 105**
**DE-C-3 432 613**
**GB-A-2 023 784**

(73) Patentinhaber: **DIDIER-WERKE AG**
**Lessingstrasse 16-18**
**D-6200 Wiesbaden (DE)**

(72) Erfinder: **Kleinevoss, Albert, Dr.**
**Emser Strasse 36**
**D-5410 Höhr-Grenzhausen (DE)**
Erfinder: **Kopia, Jochen**
**Vierwinderhöhe 46**
**D-5413 Bendorf (DE)**

(74) Vertreter: **Brückner, Raimund, Dipl.-Ing.**
**c/o Didier-Werke AG Lessingstrasse 16-18**
**D-6200 Wiesbaden (DE)**

## Beschreibung

Die Erfindung betrifft einen feuerfesten, wenigstens eine Durchflußöffnung für metallische Schmelze aufweisenden Formkörper, insbesondere Platte oder Hülse für Schieberverschlüsse am Ausguß metallurgischer Gefäße, mit einem Grundkörper aus kaltabbindendem Feuerbeton und wenigstens einem darin eingeformten oxidkeramischen Hochwerteinsatz.

Diesbezüglich sind aus de DE—AS 27 19 105, auf welcher der Oberbegriff des Aspruchs 1 beruht, Platten bekannt, bei denen der den keramischen Einsatz einschließende Grundkörper aus Feuerbeton besteht. Hierbei weist der oxidkeramische Einsatz bestimmte Eigenschaftswerte auf und ist aus $MgO$, $Cr_2O_3$, $Al_2O_3$ oder $ZrO_2$ oder aus Mischungen dieser Oxide gefertigt, indessen der Feuerbeton des Grundkörpers aus 70 bis 95 Gew.-% Tabulartonerde und 5 bis 30 Gew.-% Tonerdezement mit 80 bis 96 Gew.-% $Al_2O_3$ besteht.

Vorliegende Erfindung ist eine Weiterentwicklung insbesondere von an Schieberverschlüssen verwendeten Platten und Hülsen, die sich nach dem Prinzip der DE—AS 27 19 105 zusammensetzen und verfolgt die Aufgabe, die Haltbarkeit insbesondere von Platten noch weiter zu verbessern, durch die Verwendung eines korrosionsbeständigen, wegen seiner Sprödigkeit bisher nicht einsetzbaren Feuerbetons zur Herstellung des Grundkörpers.

Die gestellte Aufgabe wird gemäß der Erfindung im wesentlich dadurch gelöst, daß der die Hochwerteinsätze umgebende Grundkörper aus chemisch abbindendem Feuerbeton mit eisenarmer Sintermagnesia von über 80 Gew.-% $MgO$ als feuerfestes Granulat besteht und nach der Abbindung in Richtung der Durchflußöffnung verlaufende, nach der Wärmebehandlung des Formkörpers vermörtelte Dehnfugen aufweist. Auf diese Weise gelingt es, insbesondere in Schieberverschlüssen eingesetzten Platten eine vergleichsweise längere Haltbarkeit zu geben, weil beispielsweise während des Schieberbetriebes zwischen die Platten eindringende und über den Umfangsrand des Hochwerteinsatzes auf die Grundkörperfläche gelangene Schmelze, dort weniger korrosive Zerstörungen anrichten kann als bisher. Auch gegenüber etwaigen zwischen den Platten durch Einfrierungen auftretenden, zerstörenden Reibungskräften ist ein Grundkörper aus Sintermagnesia äußerst widerstandsfähig. Hinzu kommt, daß die Verwendung von Feuerbeton mit Sintermagnesia als feuerfestes Granulat durch die Anordnung von Dehnfugen risikofrei eingesetzt werden kann, denn die Fugen kommen der relativ geringen Temperaturwechselbeständigkeit der Magnesia entgegen und beugen Spannungsrissen vor, die während der Wärmebehandlung der Platte nach abgebundenem bzw. getrocknetem Grundkörper ansonsten auftreten würden. Erst das Zusammenwirken der Materialvariante mit der Dehnfugentechnik macht die Platte einsatzfähig, die infolge eines gleichmäßigen Verschleißes von Grundkörper und oxidkeramischer Einsatzplatte sowie dadurch möglicher höherer Abgußmengen eine hervorragende Wirtschaftlichkeit besitzt.

Für gleichermaßen ausgebildete Einlauf- bzw. Auslaufhülsen für Schieberverschlüsse gelten die vorstehend aufgezeigten betrieblichen Beanspruchungen zwar nicht, doch sind die Hülsen im Bezug auf Haltbarkeit und im Rahmen des Konzepts, gleiche Materialien im Schieberverschluß einzusetzen, den Platten durchaus ebenbürtig.

Hinsichtlich der näheren Gestaltung der Dehnfugen ist es vorteilhaft, diese mit dem breiten Ende zur Körperoberfläche hin keilförmig auszubilden. Dadurch wird das Entfernen der die Dehnfugen formenden Formkerne nach dem Abbinden des Grundkörpers und ein Ausmörteln der Fugen nach dem Tempern der Platte erleichtert. Im weiteren schlägt die Erfindung vor, daß bei der Ausbildung einer Platte im Grundkörper wenigstens zwei zu den Plattenlängsseiten quere und im hälftigen Bereich der Plattenlänge sich gegenüberstehende Dehnfugen vorgesehen sind, wobei die Dehnfugen wenigstens über die Dicke des Platteneinsatzes reichend in den Grundkörper eindringen. Anders bei Ein- oder Auslaufhülsen, bei denen wenigstens eine Dehnfuge radial im Grundkörper angeordnet ist. Übrigens weisen zweckmäßig alle geschlossenen Dehnfugen eine Mörtelfüllung aus dem Material des Grundkörpers auf.

Die Erfindung ist nachstehend anhand der Zeichnung erläutert.

Figur 1 zeigt eine Schieberplatte in Sicht auf die Gleitfläche,

Figur 2 einen Schnitt nach der Linie A—A der Figur 1,

Figur 3 eine Einzelheit zu Figuren 1 und 2,

Figur 4 eine zur Schieberplatte nach Figuren 1 und 2 passende Auslaufhülse in teilgeschnittenem Aufriß,

Figur 5 eine Draufsicht in Richtung Pfeil B nach Figur 3, und

Figure 6 eine längsmittig geschnittene Bodenplatte mit strichpunktiert angedeuteter Gießform.

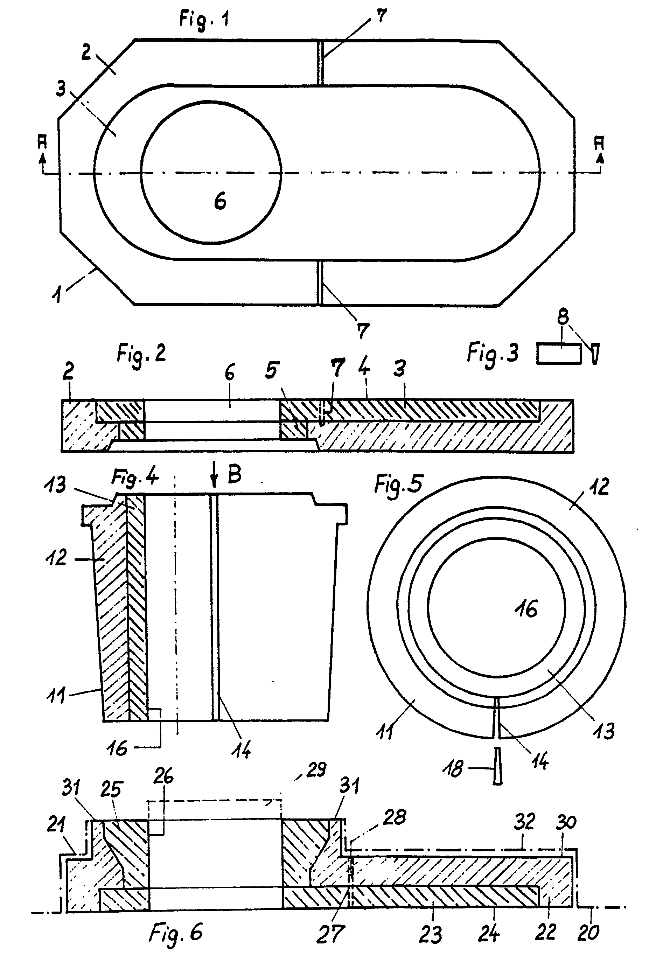

Die Schieberplatte 1 nach Figuren 1 und 2 hat einen aus kaltabbindendem, beispielsweise gieß- oder rüttelfähigem feuerfesten Material hergestellten Grundkörper 2 mit darin eingeformten Teilen aus hochverschließfestem Material in Form einer Einsatzplatte 3 an der Gleitfläche 4 und eines Einsatzringes 5, der die Durchflußöffnung 6 der Schieberplatte 1 unterhalb der Einsatzplatte 3 umgibt. Die Einsatzplatte 3 und der Einsatzring 5 sind aus einem hochfeuerfesten Oxid, beispielsweise Zirkonoxid, vorgefertigt und werden justiert in einer Gießform untergebracht und schließlich mit dem formfähigen Material aus durch Zugabe von Phosphat chemisch abbindender Sintermagnesia des Grundkörpers 2 umgeben. Nach der Abbindung weist die aus der Form genommene Schieberplatte 1 eingeformte Dehnfugen 7 auf, die auf etwa halber Plattenlänge quer zur Plattenlängsachse im Grundkörper von der Gleitfläche 4 aus über die Dicke der Einsatzplatte 3 reichend angeordnet sind. Die Gestaltung der Fugen erfolgt mittels Formkernen (Figur 3), die Keilform haben, um ein leichtes Entfernen aus dem abgebundenen Grundkörpermaterial, beispielsweise aus der Gleitfläche heraus, zu ermöglichen und dienen dazu, beim Wärmebehandeln der Schieberplatte 1 zu Rissen führenden Wärmespannungen im Grundkörper 2 zu vermeiden. Im Anschluß an die Wärmebehandlung, die einem Tempern gleichkommt, werden die Fugen 6, von denen auch mehr als zwei auf den Plattenumfang verteilt angeordnet sein können, durch Einfüllen und Glattstreichen von Grundkörpermaterial geschlossen, eine Arbeit, die durch die keilförmige Ausbildung der Dehnfugen erleichtert wird.

Ähnlich vorgegangen wird bei der Hülse 11 nach Figuren 4 und 5, die ebenfalls einen Grundkörper 12 aus Sintermagnesia hat, in den eine die Durchflußöffnung 16 bildende Einsatzhülse 13 aus Zirkonoxid eingeformt ist. Dabei erstreckt sich die nach beendeter Wärmebehandlung zu verschließende Dehnfuge 14 in Längsrichtung in der Hülse 11 und verläuft durchgehend radial vom äußeren bis zum inneren Umfang des Grundkörpers 12. Die Fuge 14 kann durch einen radial aus dem Grundkörper 12 entfernbaren und in dieser Richtung keilförmigen Formkern 18 gebildet sein. Je nach Erfordernis lassen sich auch mehrere solcher Dehnfugen 14 gegebenenfalls mit nicht durchgehenden bzw. kleineren radialen Eindringtiefen im Grundkörper vorsehen.

In Figur 6 ist das Formen einer Bodenplatte 21 aufgezeigt. Demzufolge wird zunächst die aus Zirkonoxid vorgefertigte Einsatzplatte 23 mit der Gleitfläche 24 auf eine glatte Unterlage 20 gelegt und darauf mittels eines in der Durchflußöffnung 26 vorgesehenen Justierteils 29 ein Einsatzring 25 aufgebaut. Darüber justiert gestülpt wird dann eine Form 30, die innen an den Längsseiten sich gegenüberstehende Formkeile 28 sowie Füllöffnungen 31 un 32 hat, durch die das den Grundkörper 22 bildende Material, bestehend aus einem Phosphatbinder enthaltender Sintermagnesia, eingefüllt wird. Nach Abbinden des eingefüllten Materials wird die Form abgehoben und die in diesem Fall über die ganze Plattendicke durchgehende Dehnfugen 27 aufweisende Bodenplatte 21 bei 250 bis 300°C etwa 12 Stunden getempert. Anschließend werden die Fugen 27 mit der eingefüllten Sintermagnesia vermörtelt.

Die Dicke der Fugen 7, 14, 27, ihre Ausbildung und Anordnung an einem Formkörper 1, 11, 21 hängt weitgehend von dessen Gestalt und Größe ab. Bei großformatigen Platten, beispielsweise für Ofenschieberverschlüsse, hat sich eine Fugendicke zwischen 3 und 4 mm als zweckmäßig erwiesen.

## Patentansprüche

1. Feuerfester, wenigstens eine Durchflußöffnung (6, 16) für metallische Schmelze aufweisender Formkörper, insbesondere Platte (1) oder Hülse (11) für Schieberverschlüsse am Ausguß metallurgischer Gefäße, mit einem Grundkörper (2, 12, 22) aus kaltabbindendem Feuerbeton und wenigstens einem darin eingeformten oxidkeramischen Hochwerteinsatz (3, 5, 13, 23, 25), dadurch gekennzeichnet, daß der den Hochwerteinsatz (3, 5; 13; 23, 25) umgebende Grundkörper (2, 12, 22) aus chemisch abbindendem Feuerbeton mit eisenarmer Sintermagnesia von über 80 Gew.-% MgO als feuerfestes Granulat besteht und nach der Abbindung in Richtung der Durchflußöffnung (6, 16, 26) verlaufende, nach der Wärmebehandlung des Formkörpers (1, 11, 21) vermörtelte Dehnfugen (7, 14, 27) aufweist.

2. Formkörper nach Anspruch 1, dadurch gekennzeichnet, daß die Dehnfugen (7, 14, 27) mit dem breiten Ende zur Körperoberfläche keilförmig ausgebildet sind.

3. Formkörper nach Anspruch 1 und 2, dadurch gekennzeichnet, daß bei Platten (1, 21) für Schieberverschlüsse im Grundkörper (2, 22) wenigstens zwei zu den Plattenlängsseiten quere und im hälftigen Bereich der Plattenlänge sich gegenüberstehende Dehnfugen (7, 27) vorgesehen sind.

4. Platte nach Anspruch 3, dadurch gekennzeichnet, daß die Dehnfugen (7) wenigstens über die Dicke des Platteneinsatzes (3) reichend im Grundkörper (2) angeordnet sind.

5. Formkörper nach Anspruch 1 und 2, dadurch gekennzeichnet, daß bei Hülsen (11) für Schieberverschlüsse wenigstens eine Dehnfuge (14) radial im Grundkörper (12) angeordnet ist.

6. Formkörper nach den Ansprüchen 1 bis 5, dadurch gekennzeichnet, daß die geschlossenen Dehnfugen (7, 14, 27) eine Mörtelfüllung aus dem Material des Grundkörpers (2, 12, 22) aufweisen.

## Revendications

1. Corps moulé réfractaire présentant au moins une ouverture de passage (6, 16) du métal en fusion, en particulier plaque (1) ou busette (11) pour obturateurs à coulisse sur l'orifice de coulée de récipients métallurgiques, comportant un corps de base (2, 12, 22) en béton réfractaire à prise à froid et au moins un insert (3, 5; 13; 23, 25) à haute résistance, en céramique d'oxyde, qui est moulé dans ledit corps de base, caractérisé en ce que le corps de base (2, 12, 22) enveloppant l'insert (3, 5; 13; 23, 25) à haute résistance se compose de béton réfractaire à prise chimique contenant, en tant que granulat réfractaire, de la magnésie frittée pauvre en fer, à plus de 80% en poids de MgO, et en ce qu'il présente, après la prise, des joints de dilatation (7, 14, 27) qui s'étendent en direction de l'ouverture de passage (6, 16, 26) et sont comblés à l'aide de mortier après le traitement thermique du corps moulé (1, 11, 21).

2. Corps moulé selon revendication 1, caractérisé en ce que les joints de dilatation (7, 14, 27) sont réalisés en coin avec l'extrémité large tournée en direction de la surface du corps.

3. Corps moulé selon la revendication 1 et 2, caractérisé en ce qu'il est prévu, dans le cas de plaques (1, 21) pour obturateurs à coulisse, dans le corps de base (2, 22) au moins deux joints de dilatation (7, 27) transversaux aux côtés longitudi-

EP 0 243 587 B1

naux des plaques et se faisant face dans la zone médiane de la longueur des plaques.

4. Plaque selon revendication 3, caractérisée en ce que les joints de dilatation (7) sont disposés dans le corps de base (2) de manière à s'étendre au moins sur l'épaisseur de l'inserte (3) des plaques.

5. Corps moulé selon revendication 1 et 2, caractérisé en ce que, dans le cas de busettes (11) pour obturateurs à coulisse, au moins un joint de dilatation (14) est disposé radialement dans le corps de base (12).

6. Corps moulé selon les revendications 1 à 5, caractérisé en ce que les joints de dilatation (7, 14, 27) fermés présentent un remplissage de mortier composé du même matériau que le corps de base (2, 12, 22).

**Claims**

1. Refractory moulded body, particularly a plate (1) or sleeve (11) for sliding gate valves at the outlet of metallurgical vessels, with a base body (2, 12, 22) of cold setting refractory concrete and at least one oxide ceramic high grade insert (3, 5, 13, 23, 25) moulded therein, characterised in that the base body (2, 12, 22) surrounding the high grade insert (3, 5; 13; 23, 25) comprises chemically setting refractory concrete with low-iron sintered magnesia of over 80 wt.% MgO as a refractory granulate and, after the setting, has expansion joints (7, 14, 27) which extend in the direction of the flow opening (6, 16, 26) and which, after the heat treatment of the moulded body (1, 11, 21), are filled with mortar.

2. Moulded body as claimed in claim 1, characterised in that the expansion joints (7, 14, 27) are constructed of wedge shape with the broad end towards the body surface.

3. Moulded body as claimed in claim 1 and 2, characterised in that in the case of plates (1, 21) for sliding gate valves at least two opposing expansion joints (7, 27) transverse to the longitudinal sides of the plate are provided in the central region of the length of the plate.

4. Plate as claimed in claim 3, characterised in that the expansion joints (7) are arranged in the base body (2) extending at least over the thickness of the plate insert (3).

5. Moulded body as claimed in claim 1 and 2, characterised in that in the case of sleeves (11) for sliding gate valves at least one expansion joint (14) is arranged radially in the base body (12).

6. Moulded body as claimed in claims 1 to 5, characterised in that the closed expansion joints (7, 14, 27) have a mortar filling of the material of the base body (2, 12, 22).

4

Fig. 1

Fig. 2

Fig. 3

Fig. 4

Fig. 5

Fig. 6